# EUROPEAN PATENT APPLICATION

(11) **EP 1 853 019 A1**
(43) Date of publication of application: **07.11.2007**
(21) Application number: 05808309.8
(22) Date of filing: 01.11.2005
(51) Int. Cl.: H04L 29/02, G06F 13/00, H04Q 7/32

(54) **METHOD AND SYSTEM FOR MATCHING THE WEB PAGE OF MOBILE COMMUNICATION TERMINAL**

(30) Priority: 02.02.2005 CN 200510005369
(71) Applicant: China Mobile Communications Corporation, Xicheng District Beijing 100032 (CN)
(72) Inventor: PENG, Hua, Xicheng District, Beijing 100032 (CN); FAN, Xiaohui, Xicheng District, Beijing 100032 (CN); ZHENG, Zhaohui, Xicheng District, Beijing 100032 (CN)
(74) Representative: Price, Nigel John King
(86) International application number: PCT/CN2005/001819
(87) International publication number: WO 2006/081725

(57) **Abstract**

The present invention disclosed a method and a system for processing the page information for a mobile communication terminal. The system comprises an access module, an information providing module, a strategy module, a content acquirement module and a page generation module. The information providing module generates the detailed information of a display page according to the access request information, and sends to the strategy module. The strategy module matches the detailed information of the display page with the strategy rule, and obtains a customized rule parameter of the display page, and sends to the content acquirement module. The content acquirement module communicates with the content server of a content service web site, and obtains the page information of the mobile communication terminal. The page generation module generates a browse page according to the customized rule parameter and the page information. The access module sends the browse page to the mobile communication terminal. The present invention processes the access request information and matches with the corresponding service strategy, so that the browse page can be conveniently optimized to match with the mobile communication terminal, and the personalized requirements of the users can be met.

## Description

### Field of the Invention

The present invention relates to a method and system for processing a web page information of mobile communication terminal, and more particularly relates to a method and system for a mobile portal providing said mobile communication user with a web page adapted to the mobile communication terminal, according to the special information of a mobile communication user and the mobile communication terminal thereof, which belongs to the technical field of mobile communication.

### Background of the Invention

Along with the incessant development of Mobile Internet, mobile communication users can acquire the needed information through it. However, the information that users need is always a tiny part of the voluminous amounts of information online, so the means of fast extracting the needed content from massive data is of utmost concern to the users. Thereby, service providers are required to provide intelligent services to meet above personalized demand of the mobile communication users.

When all mobile communication users just log on to a portal, the information obtained by them are the same and massive, and the mobile communication users can only search for the information required by themselves. This situation is one of the phenomena that the portal is unable to provide users with customized services.

### Summary of the Invention

The main purpose of the present invention is to provide a method and system for adapting a web page for a mobile communication terminal, optimizing the access pages of mobile communication users to make it adapted to the terminals used by the users and concurrently meet personalized requirements.

The purpose of the present invention is achieved as follow: A method for adapting a web page for a mobile communication terminal, characterized in that: a mobile portal of a mobile communication system is provided with an access module, an information providing module, a strategy module, a content acquirement module and a page generation module, wherein the information module at least includes an information base of mobile communication terminal, when the mobile communication terminal sends an access request information to the mobile portal through an access system of the mobile communication system, the following steps are executed to adapt a display page of the mobile communication terminal:
Step 1: after the access module of the mobile portal receiving said access request information, the information providing module of the mobile portal generates the detailed information of a display page according to the UA PROFILE (User Agent Profile) parameter carried in said access request information and sends it to said strategy module;
Step 2: said strategy module matches the detailed information of said display page with the strategy rule stored in said strategy module, obtains the customized rule parameter of said display page, and sends the customized rule parameter to the content acquirement module;
Step 3: said content acquirement module communicates with the content server of the content service web site in accordance with the customized rule parameter, and obtains the page information of said mobile communication terminal from said content server;
Step 4: said page generation module generates a browse page according to said customized rule parameter and said page information;
Step 5: the access module sends said browse page to said mobile communication terminal.
The system of the present invention is located in the mobile portal, and includes a access module, an information providing module, a strategy module, a content acquirement module and a page generation module; wherein,
   the access module is connected to an access gateway in the mobile communication system, used for receiving the access request information sent by a mobile communication terminal, and transmitting said access request information to said information providing module; or sending said browse page to said mobile communication terminal through said access gateway;
   the information providing module at least includes an information base of mobile communication terminal for extracting UA PROFILE parameters from said access request information, generating detailed information of a display page and sending it to said strategy module;
   the strategy module stores strategy rules for matching the detailed information of said display page with said strategy rules, obtaining the customized rule parameters of said display page, and sending the customized rule parameters to the content acquirement module;
   the content acquirement module is connected to the content server of the content service website, and obtains page information of said mobile communication terminal from said content server according to the content rule data in said customized rule parameters;
   the page generation module is used for generating a browse page according to display rule data in said customized rule parameters and said page information.
   By analyzing and processing the access request information sent by the mobile communication terminal and matching with the corresponding service strategy, the present invention enables the mobile operator to conveniently optimize the browse page for the mobile communication users to make it match with the mobile communication terminal used by the user, and concurrently meets the personalized service requirements of users.

### Brief description of the Drawings

FIG. 1 is a schematic flow chart of the method of the present invention;
FIG.2 is a schematic block diagram of the system of the present invention;
FIG.3 is a schematic block diagram illustrating a position and external connection relationship in a mobile communication network of the system of the present invention.

### Detailed Description of the Preferred Embodiments

The technical solution of the present invention will be more fully described by the following detailed description of preferred embodiments of the present invention which is to be considered together with the accompanying drawings.

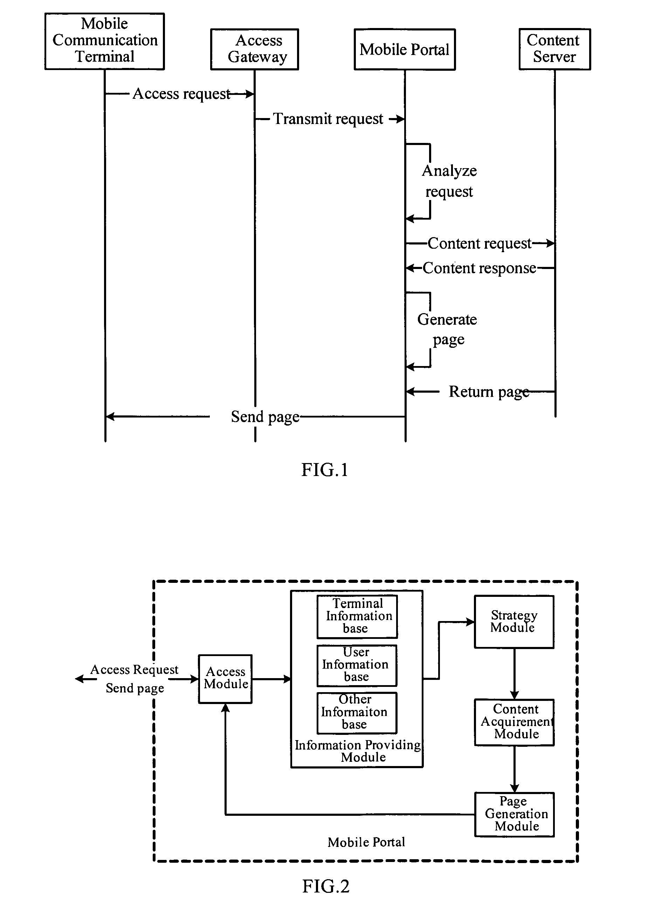

As shown in FIG. 1, the present invention adapts the browse page after receiving a access request sent by a mobile communication terminal by the following procedure: after the mobile communication terminal sends the access request to the access gateway, the access gateway transmits the access request information to a mobile portal.

The access module of the mobile portal transmits the request access information to a information providing module of the mobile portal, and the information providing module analyses and processes the request access information of the user, extracts the UA PROFILE parameter of the mobile communication terminal, wherein the parameter is the parameter information of aforementioned mobile communication terminal which includes the basic parameters of the aforementioned mobile communication terminal such as, resolution, display size and color etc. that indicate the basic information of mobile communication terminal. Then the information providing module processes the UA PROFILE parameter into the detailed information of the display page, and sends it to a strategy module of the mobile portal. The strategy module matches with the strategy rule stored in it according to the detailed information of the display page , selects the required customized rule parameter. The strategy module sends the customized rule parameter to the content acquirement module, and the content acquirement module accordingly visits to the content server of the content service website and obtains the required page information from said content server. And then this page information is sent to a page generation module by the content acquirement module, and adjusted by the page generation module on the basis of the customized rule parameter to generate a browse page adapted to the mobile communication terminal, and then sent it to said mobile communication terminal through the access module.

It should be explained here that: the access request message received by the mobile portal includes the mobile communication terminal information and the user information, wherein the mobile communication terminal and the user information could be generated at the mobile communication terminal as well as by the aforementioned access gateway. The specific generation method is as follow:
The mobile communication terminal carries the UA PROFILE parameters and the number of the mobile communication terminal in the sent access request information.

The access gateway obtains the information and the number of the mobile communication terminal from the abovementioned access request information by conforming to Wireless Application Protocol (a kind of protocol for mobile phone surfing on the Internet, abbreviated to WAP).

In addition, the carrying mode between the mobile communication terminal and the access gateway could be: SMS (Short Message Service), MMS (Multimedia Message Service), USSD (Unstructured Supplementary Service Data) and GPRS (General Packet Radio Service). When the information providing module analyses and processes the access request information of the user, it also communicates with a management system of mobile communication system according to the abovementioned user information to perform authentication and billing for the user.

Sometimes the content to be displayed on the mobile communication terminal is designated by the user itself. When the mobile communication terminal sends the access request information, the content to be displayed designated by the user could be transferred to the mobile portal by setting parameters by the user. If the information providing module when analyzing the access request information discovers the access request information containing the parameters set by the user, then it would add the parameters set by the user into the detailed information of the aforementioned display page.

The aforementioned information module could also be provided with a user information base. When the information providing module generates the detailed information of the display page, if the access request information contains the user information, the information providing module will extract parameters (These parameters include: basic style parameters and analysis style parameters, wherein the basic style parameters contain user type, gender, age, profession, belonged area and fond etc., and the analysis style parameters contain user consumption feature, and user consumption trend etc.) corresponding to the user information from the user information base, and add the parameters into the detailed information of said display page.

To provide abundant service products, the mobile communication operator can set a service information base in the information providing module. The service information base stores brand strategy information, marketing service information, initial page information, network configuration information etc. The information providing module could further match with the brand strategy information, the marketing service information, the initial page information and the network configuration information stored in the service information base according to the user information and the parameters set by the user, and obtain some special information of service feature, and add these special information of service feature into the detailed information of the display page. For instance, regarding the user consumption parameters in the user information, the information matched with the user's consumption level parameter, brand parameter and so on could be added into the detailed information of the display page as the information of service feature.

The strategy rules in the strategy module include content rule data and display rule data. The content rule data is used for guiding the content acquirement module to obtain designated content to be displayed from the content server of the content service web site; while the display rule data is used for guiding the page generation module to generate browse page with designated format. The task of the strategy module is to match the detailed information of the display page with the aforementioned content rule data and display rule data respectively after receiving the detailed information of the display page sent by the information providing module and then obtain the required customized rule parameters. Therefore these customized rule parameters include the aforementioned content rule data and display rule data.

The strategy module can concurrently generate content rule and display rule in accordance with the information set by the user and the information stored in itself.

According to the above procedure, if the access request information contains parameters set by the user, the parameters set by the user would be added into the detailed information of the display page by the information providing module. The strategy module generates the content rule and display rule in the customized rule parameters completely according to the user's setting.

If the access request information does not contain the parameters set by the user, the information providing module would obtain the user identification and terminal identification from the access request information of the user, and search the corresponding information of user and the mobile communication terminal in every database in the information providing module, and then add the searched information of user and the mobile communication terminal and other information(e.g.: service feature information) into the detailed information of the display page, and send to the strategy module. Based on the information sent by the information providing module, the strategy module generates the content rule and the display rule according to the strategy rule preset in it.

The content data obtained by the content acquirement module could originate from a local content server, or from a information server of a content provider cooperating with the operator.

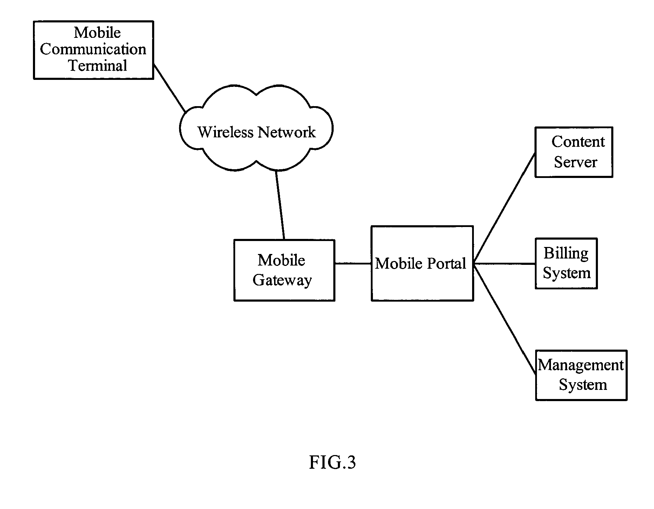

As shown in FIG.2 and FIG.3, the present invention also provides a system for realizing the abovementioned procedure. The system includes the access module, the information providing module, the strategy module, the content acquirement module and the page generation module.

The access module is used for receiving the access request information sent by the mobile communication terminal, and transmitting said access request information to said information providing module; or sending said browse page to said mobile communication terminal through said access gateway.

The information providing module at least includes an information base of mobile communication terminal, which is used for extracting UA PROFILE parameters from said access request information, generating the detailed information of the display page and sending to said strategy module.

The strategy module stores the strategy rules and is used for matching said detailed information of the display page with said strategy rules, obtaining the customized rule parameters of said display page, and sending the customized rule parameters to the content acquirement module.

The content acquirement module is connected to the content server of the content service website, and obtains the page information of said mobile communication terminal from said content server.

The page generation module is used for generating browse page according to said customized rule parameters and said page information.

The information providing module is also provided with a user information base. When the information providing module generates the detailed information of the display page, according to the user information in the access request information, it extracts the parameter corresponding to user information from the user information base and adds it into the detailed information of the display page.

The information providing module is also provided with a service information base. The information providing module further matches with the brand strategy information, the marketing service information, the initial page information and the network configuration information stored in the service information base according to the user information and the parameters set by the user, and acquires the service feature information, and adds the information of service feature into the detailed information of the display page.

The information providing module is connected to and communicates with the management system of the mobile communication system, and performs authentication and billing of the user for said mobile communication terminal.

As mentioned above, all the carrying network between the mobile communication terminal and the access gateway could be any one of SMS, MMS and USSD or any combinations thereof, which is not specially defined by the present invention.

Finally, it should be understood that the above embodiments are only used to explain, but not to limit the technical solution of the present invention. In despite of describing the present invention in detail with reference to the preferred embodiments, it should be understood that various modifications, changes or equivalent replacements could be made by an ordinary person skilled in the relevant field without departing from the spirit and scope of the technical solution of the present invention, which should be covered in the extent of the claims of the present invention.

## Claims

1. A method for adapting a web page for a mobile communication terminal, **characterized in that**: a mobile portal of a mobile communication system is provided with an access module, an information providing module, a strategy module, a content acquirement module and a page generation module, wherein the information providing module at least includes an information base of mobile communication terminal; when the mobile communication terminal sends an access request information to the mobile portal through an access system of the mobile communication system, the following steps are executed to adapt a display page of the mobile communication terminal:
Step 1: after the access module of the mobile portal receiving said access request information, the information providing module of the mobile portal generates the detailed information of a display page according to the UA PROFILE parameter carried in said access request information and sends it to said strategy module;
Step 2: said strategy module matches the detailed information of said display page with the strategy rule stored in said strategy module, obtains the customized rule parameter of said display page, and sends the customized rule parameter to the content acquirement module;
Step 3: said content acquirement module communicates with the content server of the content service web site in accordance with the customized rule parameter, and obtains the page information of said mobile communication terminal from said content server;
Step 4: said page generation module generates a browse page according to said customized rule parameter and said page information;
Step 5: the access module sends said browse page to said mobile communication terminal.

2. The method for adapting a web page for a mobile communication terminal according to claim 1, **characterized in that**: said access request information further includes user information, and the information providing module further includes a user information base; when generating the detailed information of a display page, said information providing module further extracts the parameter corresponding to said user information from said user information base according to the user information in the access request information and adds the parameter into the detailed information of said display page.

3. The method for adapting a web page for a mobile communication terminal according to claim 1 or 2, **characterized in that**: said access request information further includes a parameter set by the user containing parameters of designated information of display page and a designated display mode of display page, and said information providing module adds said parameter set by the user into the detailed information of said display page.

4. The method for adapting a web page for a mobile communication terminal according to claim 3, **characterized in that**: said information providing module further includes a service information base, said information providing module further matches with brand strategy information, marketing service information, initial page information, network configuration information stored in the service information base according to the user information and the parameter set by the user to obtain service feature information, and adds said service feature information into the detailed information of said display page.

5. The method for adapting a web page for a mobile communication terminal according to claim 2, **characterized in that**: said information providing module communicates with the management system of the mobile communication system according to said user information to perform authentication and billing of the user for said mobile communication terminal.

6. The method for adapting a web page for a mobile communication terminal according to claim 2, **characterized in that**: said user information is generated by said mobile communication terminal or an access gateway.

7. The method for adapting a web page for a mobile communication terminal according to claim 1, **characterized in that**: strategy rules stored in said strategy module includes content rule data and display rule data, after receiving the detailed information of the display page sent by information providing module, said strategy module matches the detailed information of said display page with said content rule data and said display rule data respectively to obtain the customized rule parameter needed.

8. The method for adapting a web page for a mobile communication terminal according to claim 1 **characterized in that**: said mobile communication terminal communicates with the access module of the mobile portal by the access gateway in the mobile communication system; the mobile communication terminal sends said access request information, or receives the browse page sent by said mobile portal through said access module.

9. The method for adapting a web page for a mobile communication terminal according to claim 8, **characterized in that**: the carrying network between said mobile communication terminal and said access gateway is anyone of SMS, MMS, USSD, GPRS or any combinations thereof.

10. A system for adapting a web page for a mobile communication terminal, located in a mobile portal, **characterized in that** said system comprises: a access module, an information providing module, a strategy module, a content acquirement module and a page generation module; wherein,
said access module is connected to an access gateway in the mobile communication system, used for receiving the access request information sent by a mobile communication terminal, and transmitting said access request information to said information providing module; or sending said browse page to said mobile communication terminal through said access gateway;
said information providing module at least includes an information base of mobile communication terminal for extracting UA PROFILE parameters from said access request information, generating detailed information of a display page and sending it to said strategy module;
said strategy module stores strategy rules for matching the detailed information of said display page with said strategy rules, obtaining the customized rule parameters of said display page, and sending the customized rule parameters to the content acquirement module;
said content acquirement module is connected to the content server of the content service website, and obtains page information of said mobile communication terminal from said content server according to the content rule data in said customized rule parameters;
said page generation module is used for generating a browse page according to display rule data in said customized rule parameters and said page information.

11. The system for adapting a web page for a mobile communication terminal according to claim 10, **characterized in that**: said information providing module further includes a user information base; when generating the detailed information of a display page, said information providing module, in accordance with the user information in the access request information, extracts a parameter corresponding to said user information from said user information base and adds the parameter into the detailed information of said display page.

12. The system for adapting a web page for a mobile communication terminal according to claim 11, **characterized in that**: said information providing module further includes a service information base, said information providing module further matches with brand strategy information, marketing service information, initial page information, network configuration information stored in the service information base to obtain service character information according to the user information and the parameter set by the user, and obtains the service feature information, and adds said service feature information into the detailed information of said display page.

13. The system for adapting a web page for a mobile communication terminal according to claim 11, **characterized in that**: said information providing module communicates with the management system in the mobile communication system to perform authentication and billing of the user for said mobile communication terminal.

14. The system for adapting a web page for a mobile communication terminal according to claim 10, **characterized in that**: the carrying network between said mobile communication terminal and said access gateway is any one of SMS, MMS and USSD or any combinations thereof.
